# EUROPÄISCHE PATENTSCHRIFT

(11) **EP 0 521 292 B1**
(45) Veröffentlichungstag und Bekanntmachung des Hinweises auf die Patenterteilung: **28.12.1994**
(21) Anmeldenummer: 92108741.7
(22) Anmeldetag: 23.05.1992
(51) Int. Cl.: A01G 9/10, A01G 9/14

(54) **Bauteilsatz zur Herstellung von Pflanzenpaletten**
Modular element for production of trays for plants
Elément modulaire pour la production des plateaux pour des plantes

(30) Priorität: 01.07.1991 CH 1937/91
(43) Veröffentlichungstag der Anmeldung: 07.01.1993
(73) Patentinhaber: ROMAY AG, CH-5727 Oberkulm (CH)
(72) Erfinder: Worni, Guido, CH-5736 Burg (CH)
(74) Vertreter: Fillinger, Peter

(56) Entgegenhaltungen:
- DE-A- 3 238 967

## Beschreibung

Die vorliegende Erfindung bezieht sich auf einen Bauteilsatz zur Herstellung von Pflanzenpaletten gemäss dem Oberbegriff des Anspruchs 1.

In modernen Gewächshäusern werden die Einzelpflanzen in Töpfen gezogen und die Töpfe mit der Jungpflanze auf Pflanzenpaletten gestellt. Während des Pflanzenwachstums liegen die mit Töpfen gefüllten Pflanzenpaletten auf einem Untergestell (auch Wannenhalterung genannt). Das geordnete Abstellen der Pflanzentöpfe und ihr dichtes Aufreihen auf den Pflanzenpaletten sowie der Transport der letzteren und ihr Auflegen auf das Untergestell erfolgt meist in einem automatisierten Vorgang. Diese mechanisierte und selbsttätige Handhabung der Pflanzenpalette bewirkt hohe Ansprüche an deren Masshaltigkeit. Damit sich die Pflanzenpaletten während des Pflanzenwachstums nicht verformen sind die Untergestelle mit zahlreichen Querstreben versehen, die die Paletten stützen. Zudem sind sie aus einem Material gefertigt, das wenig bis kein Wasser aufnimmt, um ein Quellen des Materials zu verhindern, was ein Verwerfen oder Verziehen der Palette zur Folge hätte.

Die vorliegende Erfindung stellt sich die Aufgabe, eine Pflanzenpalette zu schaffen, die formstabil und preisgünstig ist und die die Verwendung von Untergestellen mit nur wenigen Querstreben erlaubt.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Es zeigen:
- Fig. 1: eine perspektivische Explosionsdarstellung eines Untergestells und einer Pflanzenpalette und
- Fig. 2: ein Detail zu Fig. 1.

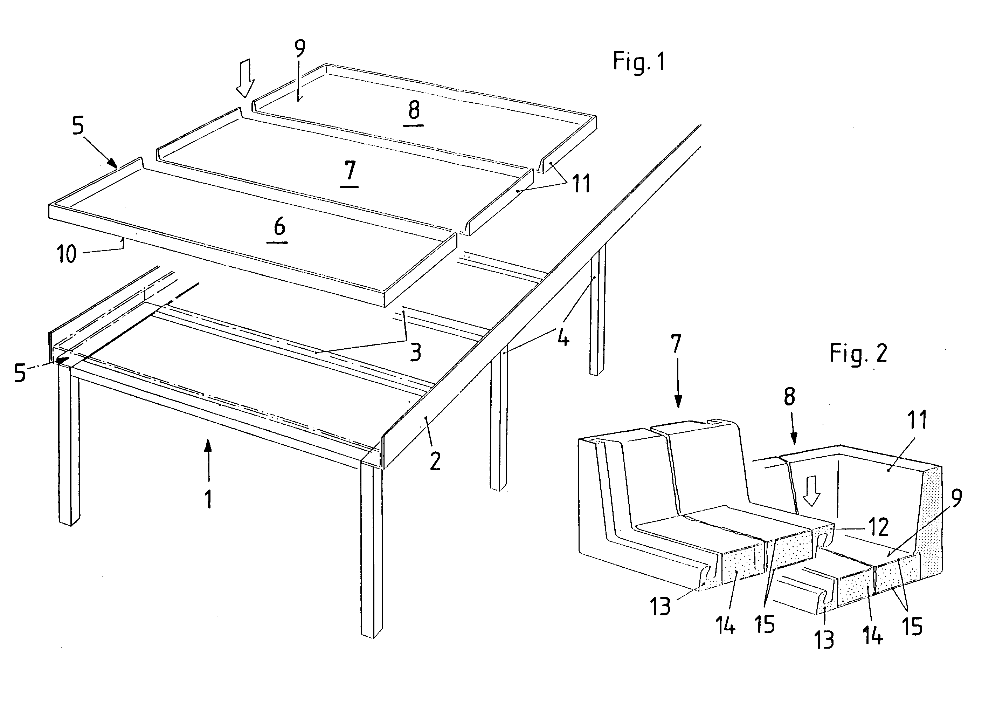

Ein Untergestell 1 besteht aus im Querschnitt L-förmigen Längsträgern 2, aus Querstreben 3 und Füssen 4. Auf dieses Untergestell 1 sind während der Wachstumszeit der Pflanzen die mit den Pflanzentöpfen besetzten Pflanzenpalette 5 abgestellt (in Fig. 1 strichpunktiert). Die Pflanzenpalette 5 gemäss der Zeichnung besteht aus drei Blattenteilen 6, 7, 8, die miteinander verbindbar sind. Die Endteile 6 und 8 sind unter sich gleich. Von diesen verschieden ist das Mittelteil 7. Das Pflanzenpalett 5 weist eine Ober- und eine Unterseite 9, 10 auf und seine äussere Randfassung 11 ist als Rahmen gestalte, der die Oberseite 9 überragt. Diese Randfassung besteht vorzugsweise aus Polyurethangiessharz. Die einander zugewandten Seiten der Paletteile 6, 7, 8 sind ebenfalls mittels Polyurethangiessharz randgefasst. Die Randfassungen 12, 13 haben ein Profil, durch das die aneinander stossenden Ränder formschlüssig verbindbar sind. Sind die Randfassungen 12, 13 aus einem gummielastischen Material gefertigt, so können sie so dimensioniert sein, dass die Profilschenkel mit Reibschluss ineinander greifen und eine form- und kraftschlüssige (und zudem wasserdichte) Verbindung bilden. Dies kann, wie die Zeichnung zeigt, dadurch verwirklicht werden, dass der nach oben abgewinkelte, kürzere Profilschenkel gegen sein freies Ende hin verdickt ist. Dadurch hintergreifen sich die Profilschenkel nicht nur, sondern sie drücken sich gegenseitig leicht zusammen. Die Paletteile 6, 7, 8 bestehen im wesentlichen noch aus einem Schaumstoffkern 14, der an der Ober- und Unterseite mit einer korrosionsbeständigen Metallfolie 15 kaschiert ist. Für das Kaschieren besonders geeignet sind Aluminiumfolien. Die Metallfolie 15 bildet gegenüber dem Schaumstoffkern 14 eine Wasserdampfsperre. Desgleichen bilden die Randfassungen 11, 12, 13, welche seitlich an den Schaumstoffkern 14 und die Metallfolien 15 angegossen sind. Dies insbesondere, wenn sie aus Polyurethangiessharz bestehen. Eine Wasseraufnahme durch den Schaumstoffkern 14 und ein Quellen desselben ist damit ausgeschlossen. Zudem stellt der zweiseitig mit einer Metallfolie kaschierte Schaumstoffkern 14 eine Verbundplatte von hoher Belastbarkeit dar, die sich unter der Last der Pflanzentöpfe nur wenig und zudem nur elastisch verformt.

Nach weiteren nicht dargestellten Ausführungsbeispielen kann die Pflanzenpalette nur aus zwei oder vier und mehr Palettteilen bestehen, wobei es auch möglich ist, die Pflanzenpalette diagonal zu teilen.

## Patentansprüche

1. Bauteilsatz zur Herstellung von Pflanzenpaletten (5) mit einer Ober- und einer Unterseite (9, 10), dadurch gekennzeichnet, dass er mindestens zwei Paletteile (6, 7, 8) aufweist, die aneinander gefügt die Pflanzenpalette (5) bilden, wobei die Paletteile (6, 7, 8) durch erste und zweite Ränder begrenzt sind und die ersten Ränder die Randseiten der Palette bilden und mit den zweiten Rändern aneinander stossen, dass die Paletteile (6, 7, 8) mittels eines Kunstharzes randgefasst, dass diese Randfassungen (11 bzw. 12, 13) längs den ersten Rändern einen die Oberseite (9) überragenden Rahmen und längs den zweiten Rändern eine mit der Randfassung (12, 13) des anstossenden Paletteils (6, 7, 8) verbindbares Profil bilden, und dass die Ober- und Unterseite (9, 10) sowie die Randfassungen (11, 12, 13) als Dampfsperre ausgebildet sind.

2. Bauteilsatz nach Anspruch 1, dadurch gekennzeichnet, dass die Ober- und Unterseite (9, 10) durch eine Metallfolie (15), vorzugsweise eine Aluminiumfolie gebildet sind.

3. Bauteilsatz nach Anspruch 2, dadurch gekennzeichnet, dass die Metallfolien (15) auf eine Schaumstoffschicht (14) aufgezogen sind.

4. Bauteilsatz nach einem der Ansprüche 1 bis 3, dadurch gekennzeichnet, dass die Randfassungen (11, 12, 13) aus Polyurethangiessharz bestehen.

5. Bauteilsatz nach einem der Ansprüche 1 bis 4, dadurch gekennzeichnet, dass die Randfassungen (12, 13) längs den zweiten Rändern form- und/oder kraftschlüssig wirkende Profile aufweisen.

## Claims

1. A set of components for the production of plant pallets (5) with an upper and a lower side (9, 10), characterised in that it comprises at least two pallet parts (6, 7, 8) which form the plant pallet (5) when joined together, wherein the pallet parts (6, 7, 8) are delimited by first and second edges and the first edges form the edge sides of the pallet and abut against each other by means of the second edges, that the pallet parts (6, 7, 8) are surrounded at the edges by means of a synthetic resin, that these edge surrounds (11; 12, 13) form a frame along the first edges which projects above the upper side (9) and form a section along the second edges which can be attached to the edge surround (12, 13) of the abutting pallet part (6, 7, 8), and that the upper and lower sides (9, 10) as well as the edge surrounds (11, 12, 13) are constructed as a vapour barrier.

2. A set of components according to claim 1, characterised in that the upper and lower sides (9, 10) are formed by a metal foil (15), preferably an aluminium foil.

3. A set of components according to claim 2, characterised in that the metal foils (15) are mounted on a layer of foamed material (14).

4. A set of components according to any one of claims 1 to 3, characterised in that the edge surrounds (11, 12, 13) consist of cast polyurethane resin.

5. A set of components according to any one of claims 1 to 4, characterised in that the edge surrounds (12, 13) have sections with a positive- or non-positive fitting action along the second edges.

## Revendications

1. Elément modulaire servant à réaliser des plateaux (5) porteurs de plantes, présentant une face supérieure et une face inférieure (9, 10) caractérisé en ce qu'il est composé d'au moins deux plateaux élémentaires (6, 7, 8) formant par leur jonction l'élément modulaire (5), ces plateaux élémentaires (6, 7, 8) étant limitée par des bords , premiers et seconds, les premiers bords formant les bordures de la palette avec aboutement aux deuxièmes bords, les plateaux élémentaires (6, 7, 8) ayant une bordure en matière plastique dont les parties (11 ou 12, 13) situées le long des premiers bords forment un cadre dépassant audessus de la surface supérieure (9), tandis que les parties (12, 13) situées le long des deuxièmes bords ont la forme d'un profilé qui peut être relié à la partie (12, 13) du bord de la palette par aboutement (6, 7, 8) , et en ce que les faces supérieure et inférieure (9, 10) ainsi que les parties de bordure (11, 12, 13) sont réalisées en piège à vapeur.

2. Elément modulaire selon la revendication 1, caractérisé en ce que les faces supérieure et inférieure (9, 10) sont constituées d'une feuille métallique (15), de préférence une feuille d'aluminium.

3. Elément modulaire selon la revendication 2, caractérisé en ce que les feuilles métalliques (15) sont plaquées sur une couche d'un matériau alvéolaire (14).

4. Elément modulaire selon une des revendications 1 à 3, caractérisé en ce que les parties de bordure (11, 12, 13) sont constituées en résine coulée en polyuréthane.

5. Elément modulaire selon une des revendications 1 à 4, caractérisé en ce que les parties (12, 13) situées le long des seconds bords ont la forme de profilés travaillant par interpénétration par la forme et ou par la force.
